Europäisches Patentamt

European Patent Office

Office européen des brevets

(11) Veröffentlichungsnummer: **0 061 121**
A1

(19)

(12) ## EUROPÄISCHE PATENTANMELDUNG

(21) Anmeldenummer: 82102104.5

(22) Anmeldetag: 16.03.82

(51) Int. Cl.³: **B 05 D 5/02**
C 09 D 3/48
//D21H1/10

(30) Priorität: 19.03.81 DE 3110754

(43) Veröffentlichungstag der Anmeldung:
29.09.82 Patentblatt 82/39

(84) Benannte Vertragsstaaten:
AT BE CH DE FR GB IT LI NL SE

(71) Anmelder: Letron Gesellschaft mit beschränkter
Haftung
Stenger Strasse 2
D-8750 Aschaffenburg(DE)

(72) Erfinder: Diesel, Hans-Dieter, Dr. Dipl.-Chem.
Ellenseestrasse 37-39
D-6453 Seligenstadt(DE)

(72) Erfinder: Schmidt, Hans-Joachim
Hirtenbornstrasse 18
D-8751 Haibach(DE)

(74) Vertreter: Türk, Dietmar, Dr. rer. nat. et al,
Redies, Redies, Türk & Gille Bruckner Strasse 20
D-4000 Düsseldorf 13(DE)

(54) Verfahren zur Herstellung eines mit durch Elektronenstrahlen gehärtetem Lack beschichteten flächenförmigen Trägermaterials mit matter Oberfläche.

(57) Verfahren zur Herstellung eines mit durch Elektronenstrahlen gehärtetem Lack beschichtetem flächenförmigen Trägermaterials mit matter Oberfläche, wobei das Trägermaterial mit einem durch Elektronenstrahlen härtbaren Lack (EBC-Lack) beschichtet wird, der 4 bis 40 Gew.-%, bezogen auf den fertigen EBC-Lack, eines Gemisches aus 40 bis 90 Gewichtsteilen wasserverdünnbaren, vernetzungsfähigen Monomeren und 60 bis 10 Gewichtsteilen Wasser und gegebenenfalls 0 bis 20 Gew.-%, bezogen auf den fertigen EBC-Lack, feindisperse Kieselsäure enthält, und die Lackschicht mit Elektronenstrahlen gehärtet wird.

EP 0 061 121 A1

Anmelder: Letron Gesellschaft mit beschränkter Haftung
Stenger-Str. 2 D-8750 Aschaffenburg

Verfahren zur Herstellung eines mit durch Elektronenstrahlen gehärtetem Lack beschichtetem flächenförmigen
Trägermaterials mit matter Oberfläche.

Die vorliegende Erfindung betrifft ein Verfahren zur
Herstellung eines mit durch Elektronenstrahlen gehärtetem
Lack beschichtetem flächenförmigen Trägermaterials mit
matter Oberfläche.

Es ist bekannt, Trägerfolien verschiedener Art mit Lacken
zu beschichten, die durch Bestrahlung mittels energiereicher Elektronen gehärtet werden können. Die Härtung erfolgt überlicherweise in einer Schutzgasatmosphäre unter
Ausschluß von Sauerstoff. Es ist jedoch auch bereits
ein Verfahren vorgeschlagen worden, bei dem die Anwendung
einer Schutzgasatmosphäre nicht mehr erforderlich ist.
Dabei wird ein Schichtstoff, bestehend aus Trägerfolie,
einem durch Elektronenstrahlen härtbaren Lack und einem
Film aus Polyester, Polyäthylen, Polypropylen oder Äthylen-
Propylen-Copolymerisat durch Bestrahlen mit Elektronenstrahlen gehärtet und anschließend der Film abgezogen
(P 30 24 582.o). Wenn bei diesem Verfahren der Film aus
Polyester, Polyäthylen, Polypropylen oder Äthylen- Propylen-Copolymerisat eine strukturierte Oberfläche aufweist, so wird die jeweilige Strukturierung auf die Oberfläche der gehärteten EBC-Lackschicht übertragen. Wenn z.B. ein Kunststoff-Film verwendet wird, der mit pulverförmigen Silikaten gefüllt ist, und der eine rauhe Oberfläche aufweist, wird eine EBC-Lackoberfläche erhalten, die mattiert erscheint. Der Mattgrad der EBC-Oberfläche hängt dabei von dem Mattgrad der Oberfläche des verwendeten Kunststoff-Films ab. Dieses Verfahren setzt daher voraus, daß zur Herstellung einer mattierten EBC-Oberfläche ein Kunststoff-Film mit entsprechend mattierter Oberfläche bereitgestellt wird. Für die Einstellung von verschiedenen Mattgraden der EBC-Oberfläche müssen daher Kunststoff-Filme mit verschieden eingestelltem Mattgrad der Oberfläche bereitgehalten werden. Das ist naturgemäß aufwendig. Der vorliegenden Erfindung liegt daher die Aufgabenstellung zugrunde, ein Verfahren der eingangs beschriebenen Art zu finden, bei dem verschiedene Mattgard der EBC-Oberfläche eingestellt werden können, ohne daß dafür Kunststoff-Filme mit verschieden mattierter Oberfläche bereitgehalten werden müssen.

Es wurde nun überraschenderweise gefunden, daß diese Aufgabenstellung dadurch gelöst werden kann, daß das flächenförmige Trägermaterial mit einem durch Elektronenstrahlen härtbaren Lack (EBC-Lack) beschichtet wird, der 4 bis 40 Gew.-% bezogen auf den fertigen EBC-Lack eines Gemisches aus

40 bis 90 GT wasserverdünnbaren, vernetzungsfähigen Monomeren
60 bis 10 GT Wasser und

enthält, und die Lackschicht mit Elektronenstrahlen gehärtet wird. (GT bedeutet Gewichtsteile.)

Bevorzugt werden 10 bis 30 Gew.-%, besonders bevorzugt 20 bis 25 Gew.-% des Gemisches eingesetzt. Das Gemisch enthält bevorzugt 50 bis 70 GT wasserverdünnbare vernetzungsfähige Monomere und 50 bis 30 GT Wasser.

Durch Elektronenstrahlen härtbare bzw. gehärtete Lacke sind im Stand der Technik als sogenannte EBC-Lacke bekannt. Dieser Ausdruck wird nachfolgend für diese Lacke der Einfachheit halber verwendet.

EBC-Lacke sind z.B. aus den nachfolgend aufgeführten Druckschriften bekannt: DE-PS 1 694 177, DE-PS 2 063 134, DE-PS 2  063 135, DE-AS 20 49 714, DE-AS 20 49 715, DE-AS 20 64 701,  DE-OS 27 04 969 und DE-OS 28 01 396.

Solche Lacke sind z.B. gemäß der DE-OS 20 51 467 dadurch gekennzeichnet, daß sie eine Vielzahl von $>C=C<$-Gruppen im Polymer-Molekül besitzen. Zum leichteren Härten sind diese Gruppen vorzugsweise $CH_2=C-$ Gruppen, die an der Polymerkette hängen. Unter "Vielzahl" sind mindestens 3 oder im Mittel mehr als 2 Gruppen zu verstehen. Insbesondere sind wie in der DE-OS 21 59 303 angegeben wird, polymerisierbare Harze mit endständigen Acrylat- oder Methacrylat-Gruppen oder $\alpha,\beta$-olefinisch ungesättigte organische Harze verwendbar. Solche Harze sind u.a. ungesättigte Polyesterharze, Acrylatharze, modifizierte organische Harze, silikonmodifizierte organische Harze und Epoxid-Harze.

Diese Harze können übliche Zusatzstoffe enthalten, wie Tixotropiermittel, Farbstoffe, Pigmente, Stabilisatoren und Füllstoffe.

Als flächenförmiges Trägermaterial kann gemäß der Erfindung eine Folie verwendet werden, wie sie nach dem Stand der Technik zur Herstellung von mit EBC-Lack beschichteten Trägerfolien eingesetzt wird. Es kommen also hierfür Papiere, Vliese, textile Bahnen und Vulkanfiber, die mit

Harzen auf Basis Phenol, Harnstoff-Formaldehyd, Melamin, Acrylharz-Dispersionen, mit Wasserglas oder mit Mischungen derselben getränkt sein können. Es können auch Kunststoff-Folien, wie z.B. PVC-Folien, eingesetzt werden. Die Stärke des flächenförmigen Trägermaterials kann in weiten Grenzen schwanken und ist dem späteren Verwendungszweck des mit EBC-Lack beschichteten flächenförmigen Trägermaterials angepaßt. Bevorzugt weist das beschichtete Trägermaterial eine Schichtdicke von 20 bis 500 µm auf.

Das flächenförmige Trägermaterial kann, wie bereits erwähnt, gefärbt oder ungefärbt sein, und kann ein Dekor aufweisen, das in belieber Weise z.B. durch Aufdrucken des Dekors erzeugt worden sein kann. -

Bevorzugt als flächenförmiges Trägermaterial ist eine Dekorbahn, die eine gegebenenfalls mit Kunstharz imprägnierte Papierbahn ist. Bevorzugt als Kunstharz hierfür sind Harnstoff-Formaldehydharze, die mit Acrylharz-Dispersionen abgemischt sein können. Die Imprägnierung der Papierbahn kann auch aus Aminoplastharzen, Polyesterharzen, Acryldispersionen bzw. Mischungen daraus bestehen.

Die Beschichtung des flächenförmigen Trägermaterials mit dem EBC-Lack erfolgt in üblichen Beschichtungsanlagen z.B. durch Lackauftrag mit Rakel, Bürste, Rasterwalze oder Reverse-Roller-Coater. Die Schichtdicke der EBC-Lack-Schicht läßt sich durch das Auftragsaggregat einstellen. Es werden Auftragsmengen von 3 bis 50 g/m², bevorzugt 10 bis 40 g/m², besonders bevorzugt 15 bis 25 g/m² eingesetzt. Die Auftragsmenge hängt von der Rauhigkeit des Untergrundes und dem vorgesehenen Verwendungszweck ab. Bei PVC-Folien mit sehr glatter Oberfläche genügen geringe Auftragsmengen innerhalb der oben angegebenen Bereiche.

Unter dem Begriff "wasserverdünnbar" ist zu verstehen, daß das betreffende Monomer mit Wasser emulgierbar bzw. ohne Phasentrennung mischbar ist. Die wasserverdünnbaren Monomeren werden im Gemisch mit Wasser dem EBC-Lack zugesetzt.

Wasserverdünnbare, vernetzungsfähige Monomere sind solche, die mit dem EBC-Lack unter Vernetzung reagieren. Sie enthalten deshalb auch C=C -Bindungen. Beispiele hierfür sind:

Pentaerythrittriacrylat, Diethylenglykoldiacrylat, Neopenthylglykoldiacrylat, Trimethylolpropantriacrylat, 1,6-Hexandioldiacrylat, Hydroxyethylacrylat, Tripropylenglykoldiacrylat, N-Vinyl-2-pyrrolidon, einzeln oder im Gemisch.

Insbesondere kann als wasserverdünnbares, vernetzungsfähiges Monomer Hydroxiethylacrylat eingesetzt werden.

Weiterhin kann zur Einstellung des Matteffektes der EBC-Lack 0 bis 20 Gew.-%, bezogen auf den fertigen EBC-Lack, handelsübliche feindisperse Kieselsäure eingearbeitet enthalten. Dabei addiert sich der durch das Monomeren/Wassergemisch bewirkte Matteffekt zu dem durch die Kieselsäure bewirkten Matteffekt, so daß Mattierungsgrade erreicht werden, die allein durch Zusatz von Kieselsäure nicht erzielt werden können, weil der Zusatz von Kieselsäure durch die rheologischen Eigenschaften des Lacksystems bzw. das optische Erscheinungsbild des Produktes mengenmäßig begrenzt ist.

Bei der Auswahl geeigneter handelsüblicher Kieselsäure ist zu berücksichtigen, daß zu kleine Teilchengrößen das rheologische Verhalten des Lacksystems ungünstig beeinflussen und daß Kieselsäure mit sehr grober Teilchengröße insbesondere bei dünnem Lackauftrag mittels Rasterwalze eine unregelmäßige Ausbildung der Lackoberfläche bewirken.

Die Härtung des auf das flächenförmige Trägermaterial aufgetragenen EBC-Lackes erfolgt auf handelsüblichen Elektronenstrahlen liefernden Anlagen. Diese Anlagen werden überlicherweise mit einer Energie von etwa 150 bis 300 KV betrieben. Dabei kann sowohl mit Anlagen gearbeitet werden, bei denen die Härtung in einer Schutzgasatmosphäre unter Ausschluß von Sauerstoff erfolgt, als auch in Anlagen, die einen Kunststoff-Film gemäß der eingangs zitierten Patentanmeldung P 30 24 582.0 verwenden, wobei eine Schutzgasatmosphäre nicht erforderlich ist. Im letzteren Fall kann der Kunststoff-Film eine glatte Oberfläche aufweisen. Durch Veränderung des Gehaltes an wasserverdünnbaren Monomeren, Wasser und gegebenenfalls an feindisperser Kieselsäure lassen sich trotzdem Oberflächen mit unterschiedlichen Mattgraden herstellen.

Beispiel 1

Eine endlos gefertigte dekorative Papierbahn (mit einem Dekor bedrucktes Papier), die mit einem Kunstharzgemisch auf Basis Harnstoff-Formaldehydharz und Acrylharz-Dispersion imprägniert und gehärtet worden ist, wird mittels Drahtrakel mit einem durch Elektronenstrahlen härtbarem Lack auf Basis Urethan-Acrylat beschichtet, der 20 Gew.-%, bezogen auf den fertigen EBC-Lack, eines Gemisches aus 50 GT wasserverdünnbaren vernetzbaren Monomeren und 50 GT Wasser

vernetzungsfähige

enthält. Als wasserverdünnbare Monomere wird ein Gemisch aus

75 GT Hydroyethylacrylat und

25 GT 1,6-Hexandioldiacrylat

eingesetzt.

Die Lackauftragsmenge beträgt etwa 15 bis 25 g/m². Unmittelbar nach der Lackapplikation wird dem noch ungehärteten Lack ein 25 µm starker Polyesterfilm mit glatter Oberfläche zukaschiert. Die Kaschiergeschwindigkeit beträgt 40 m/min. Die so entstandene mehrschichtige Materialbahn wird nun mittels energiereicher Elektronen durch den Polyesterfilm hindurch bestrahlt und dadurch gehärtet. Nach Verlassen der Härtungszone wird der zukaschierte Polyesterfilm abgezogen und getrennt von der lackierten Trägerfolie aufgewickelt. Die Oberfläche der so entstandenen EBC-lackierten Trägerfolie weist einen Matteffekt auf.

Beispiel 2

Ein endlos gefertigter Polyesterfilm mit glatter Oberfläche von 25 µm Dicke wird mittels Drahtrakel mit einem durch Elektronenstrahlen härtbaren Lack auf Acrylatbasis beschichtet, der 24 Gew.-%, bezogen auf den fertigen EBC-Lack, eines Gemisches aus 65 GT Hydroxiethylacrylat und 35 GT Wasser enthält. Die Lackauftragsmenge beträgt etwa 15 bis 25 g/m². Unmittelbar nach der Lackapplikation wird auf den noch ungehärteten Lack eine endlos gefertigte dekorative Papierbahn (40 g/m²), die mit einem Kunstharzgemisch auf Basis Harnstoff-Formaldehydharz und Polyvinylalkohol imprägniert und gehärtet worden ist, zukaschiert.

Die Kaschiergeschwindigkeit beträgt 40 m/min. Die so entstandene mehrschichtige Materialbahn wird nunmehr mittels energiereicher Elektronen durch die mit Kunstharz imprägnierte und gehärtete dekorative Papierbahn hindurch bestrahlt und dadurch gehärtet. Nach Verlassen der Härtungszone wird der Polyesterfilm abgezoen und getrennt von der lackierten Trägerfolie aufgewickelt. Die so entstandene EBC-lackierte Folie ist dünn und zeichnet sich durch hohe Flexibilität, verbunden mit sehr guten Oberflächeneigenschaften, aus. Die Oberfläche der EBC-lackierten Folie weist einen Matteffekt auf.

Beispiel 3

Eine endlos gefertigte dekorative Papierbahn (mit einem Dekor bedrucktes Papier), die mit einem Kunstharzgemisch auf Basis Harnstoff-Formaldehydharz und Acrylharz-Dispersion imprägniert und gehärtet worden ist, wird mittels einer Rasterwalze mit einem durch Elektronenstrahlen härtbaren Lack auf Basis Urethan-Acrylat beschichtet, der 20 Gew.-%, bezogen auf den fertigen EBC-Lack, Hydroxiethylacrylat und Wasser im Verhältnis 1:1, und 10 Gew.-%, bezogen auf den fertigen EBC-Lack. handelsübliche feindisperse Kieselsäure eingearbeitet enthält.Die Lackauftragsmenge beträgt etwa 10 bis 15 g/m². Die so beschichtete Materialbahn wird nun unter Schutzgas mittels energiereicher Elektronen bestrahlt und dadurch gehärtet. Die Oberfläche der so entstandenen EBC-lackierten Trägerfolie weist einen Matteffekt auf, der deutlich stärker ist als bei einem Material, das in analoger Weise ohne Zusatz des Hydroxiethylacrylat/Wasser-Gemisches hergestellt wurde.

T 31 069

Anmelder: Letron Gesellschaft mit beschränkter Haftung
Stenger-Str. 2  D-8750 Aschaffenburg

Patentansprüche

1. Verfahren zur Herstellung eines mit durch Elektronenstrahlen gehärtetem Lack beschichtetem flächenförmigen Trägermaterials mit matter Oberfläche, d a d u r c h g e k e n n z e i c h n e t, daß das flächenförmige Trägermaterial mit einem durch Elektronenstrahlen härtbaren Lack (EBC-Lack) beschichtet wird, der 4 bis 40 Gew.-% bezogen auf den fertigen EBC-Lack eines Gemisches aus

40 bis 90 GT wasserverdünnbaren,vernetzungsfähigen Monomeren und
60 bis 10 GT Wasser

enthält, und die Lackschicht mit Elektronenstrahlen gehärtet wird.

2. Verfahren nach Anspruch 1, dadurch gekennzeichnet, daß 10 bis 30 Gew.-% des Monomeren/Wasser-Gemisches eingesetzt werden.

3. Verfahren nach Anspruch 1 und 2, dadurch gekennzeichnet, daß 20 bis 25 Gew.-% des Monomeren/Wasser-Gemisches eingesetzt werden.

4. Verfahren nach einem der Ansprüche 1 bis 3, dadurch gekennzeichnet, daß ein Gemisch verwendet wird, welches 50 bis 70 GT wasserverdünnbare Monomere und 50 bis 30 GT Wasser enthält.

- 2 -

5. Verfahren nach einem der Ansprüche 1 bis 4, dadurch gekennzeichnet, daß das verwendete Trägermaterial eine Schichtdicke von 20 bis 500 μm aufweist.

6. Verfahren nach einem der Ansprüche 1 bis 5, dadurch gekennzeichnet, daß die Auftragsmenge des EBC-Lackes 5 bis 50 g/m², bevorzugt 10 bis 40 g/m², besonders bevorzugt 20 bis 30 g/m² beträgt.

7. Verfahren nach einem der Ansprüche 1 bis 6, dadurch gekennzeichnet, daß als wasserverdünnbare Monomere eine bzw. ein Gemisch mehrerer der im folgenden aufgeführten Substanzen verwendet wird:
Hydroxiacrylat, Pentaerythrittriacrylat, Diethylenglykoldiacrylat, Neopentylglykoldiacrylat, Trimethylolpropantriacrylat, 1,6-Hexandioldiacrylat, Hydroxiethylacrylat, Tripropylenglykoldiacrylat, N-Vinyl-2-pyrrolidon.

8. Verfahren nach einem der Ansprüche 1 bis 7, dadurch gekennzeichnet, daß als wasserverdünnbare Monomere
100 bis 50 TG Hydroxiethylacrylat und
0 bis 50 GT 1,6-Hexandioldiacrylat
eingesetzt werden.

9. Verfahren nach einem der Ansprüche 1 bis 8, dadurch gekennzeichnet, daß der verwendete EBC-Lack 0 bis 20 Gew.-%, bezogen auf den fertigen EBC-Lack, feindisperse Kieselsäure oder feinverteiltes $SiO_2$ eingearbeitet enthält.

**EUROPÄISCHER RECHERCHENBERICHT**

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. 3) |
|---|---|---|---|
| X | DE-A-2 724 087   (DESOTO)  * Insgesamt * | 1,5,7, 9 | B 05 D    5/02 <br> C 09 D    3/48 // <br> D 21 H    1/10 |
| | --- | | |
| X | DE-A-2 436 614   (BASF FARBEN & FASERN) <br> * Insgesamt * | 1-5,9 | |
| | --- | | |
| A | EP-A-0 012 339   (BASF) | | |
| | ----- | | |

|  |
|---|
| **RECHERCHIERTE SACHGEBIETE (Int. Cl. 3)** |
| B 05 D <br> C 09 D <br> D 21 H |

Der vorliegende Recherchenbericht wurde für alle Patentansprüche erstellt.

| Recherchenort <br> DEN HAAG | Abschlußdatum der Recherche <br> 02-06-1982 | Prüfer <br> NESTBY K. |
|---|---|---|